# EUROPEAN PATENT APPLICATION

(11) **EP 4 718 643 A1**
(43) Date of publication of application: **01.04.2026**
(21) Application number: 25785392.9
(22) Date of filing: 13.01.2025
(51) Int. Cl.: H01R 43/055, H01R 43/048

(54) **OUTER CONDUCTOR CUTTING AND INSERTING APPARATUS AND METHOD**

(30) Priority: 10.04.2024 CN 202410426877
(71) Applicant: Jiangsu Bozhiwang Automation Equipment Co., Ltd., Changzhou, Jiangsu 213125 (CN)
(72) Inventor: SI, Xiangliang, hangzhou, Jiangsu 213125 (CN); SI, Weiliang, hangzhou, Jiangsu 213125 (CN); BAI, Gang, hangzhou, Jiangsu 213125 (CN)
(74) Representative: Chung, Hoi Kan
(86) International application number: PCT/CN2025/072049
(87) International publication number: WO 2025/213910

(57) **Abstract**

The present invention relates to the technical field of cable processing, and in particular to an outer conductor cutting-through device and method. The device includes: a feeding and cutting-off mechanism, including a feeding assembly for moving a terminal strip, a cutting-off assembly arranged in a terminal strip movement direction, and a holding seat arranged in a direction opposite the cutting-off assembly for holding an outer conductor; a moving and threading mechanism arranged on a side of the feeding and cutting-off mechanism, the moving and threading mechanism including a sliding seat capable of reciprocating in a direction parallel to the terminal strip movement direction, a threading driver for driving the sliding seat to move, a gripper arranged on the sliding seat, and a rotation driver connected to the gripper for driving the gripper to change in direction; and a gripping and supporting mechanism arranged on a distal end relative to a gripper movement direction, the gripping and supporting mechanism including a cable gripper for gripping a cable. In such an arrangement, the present invention achieves the separation between the cutting-off operation and the subsequent threading operation for the outer conductor, such that the cutting-off operation and the subsequent threading operation do not interfere with each other, thereby improving the accuracy in threading the outer conductor.

## Description

### TECHNICAL FIELD

The present invention relates to the technical field of cable processing, and in particular to an outer conductor cutting-through device and method.

### BACKGROUND

Coaxial cable is a type of signal transmission line primarily used for the transmission of analog and digital signals. It is mainly applied to cable television transmission, long-distance telephone transmission, short-distance connection between computer systems (i.e., local area networks), etc. During the processing of a terminal for the coaxial cable, it is necessary to first crimp a central pin onto a central conductor, then sleeve an outer conductor on the central pin and crimp the outer conductor on the coaxial cable.

In the related art, the outer conductor is typically crimped by successively performing threading and cutting-through, namely: first feeding a terminal strip of the outer conductor to a crimping machine, inserting a cable into the outer conductor and then cutting off the outer conductor from the terminal strip while crimping.

However, the inventor has found that the synchronized occurrence of crimping and cutting-off described above causes the outer conductor to be affected by a cuting-off tool during crimping, resulting in displacement to varying extents. As a result, the accuracy of the threading position of the outer conductor is affected.

### SUMMARY

In view of at least one of the above technical problems, the present invention provides an outer conductor cutting-through device and method, in which structural improvements are made to improve the threading accuracy for the outer conductor.

According to a first aspect of the present invention, an outer conductor cutting-through device is provided. The outer conductor cutting-through device includes: a feeding and cutting-off mechanism, including a feeding assembly for moving a terminal strip, a cutting-off assembly arranged in a terminal strip movement direction, and a holding seat arranged in a direction opposite the cutting-off assembly for holding an outer conductor;
a moving and threading mechanism arranged on a side of the feeding and cutting-off mechanism, the moving and threading mechanism including a sliding seat capable of reciprocating in a direction parallel to the terminal strip movement direction, a threading driver for driving the sliding seat to move, a gripper arranged on the sliding seat, and a rotation driver connected to the gripper for driving the gripper to change in direction; and
a gripping and supporting mechanism arranged on a distal end relative to a gripper movement direction, the gripping and supporting mechanism comprising a cable gripper for gripping a cable;
wherein when the rotation driver drives the gripper to rotate to a first angle, the gripper is disposed towards the holding seat, and when the rotation driver drives the gripper to rotate to a second angle, the gripper is disposed towards the cable gripper; and when the threading driver drives the sliding seat to move to a first position, the gripper corresponds to the holding seat, and when the threading driver drives the sliding seat to move to a second position, the gripper threads the outer conductor onto a central pin.

In some embodiments of the present invention, the feeding and cutting-off mechanism is further provided with an identification mechanism, which includes fixed frames fixed on both sides of the feeding assembly and laser sensors fixed to the fixed frames, and the laser sensors are disposed towards the terminal strip.

In some embodiments of the present invention, the laser sensors include a first sensor disposed towards the holding seat and a second sensor disposed towards the terminal strip at an incoming side of the feeding assembly.

In some embodiments of the present invention, the feeding and cutting-off mechanism is further provided with a guide pipe with one end towards the feeding assembly and the other end extending to a scrap box for discharging scraps from the terminal strip.

In some embodiments of the present invention, the sliding seat is further provided with a depth detecting mechanism for detecting a distance between the central pin and an end of the outer conductor.

In some embodiments of the present invention, the depth detecting mechanism includes a probe, a GT detector connected to the probe, and a detection driver for driving the probe to move towards a cable direction, and the probe is located at a central position between two gripping jaws when the cable gripper rotates to the second angle.

In some embodiments of the present invention, the cable is a dual-core cable, and the outer conductor has a dual-hole structure; the gripping and supporting mechanism is further provided with a supporting assembly disposed on the cable gripper towards a direction close to the moving and threading mechanism; the supporting assembly is provided with a cable separator that is movably disposed towards a central direction of the dual-core cable; and the cable separator serves to spread a distance between two cable cores to correspond to two holes of the outer conductor.

In some embodiments of the present invention, the supporting assembly further includes transverse gripping assemblies arranged on both sides of the cable separator in a horizontal direction, and a distance between the closed transverse gripping assemblies corresponds to a maximum transverse distance between the two inserted cable cores.

In some embodiments of the present invention, the supporting assembly further includes longitudinal gripping assemblies arranged on both sides of the cable separator at a cable insertion position in a vertical direction, and a distance between the closed longitudinal gripper is equal to diameters of the two cable cores.

According to a second aspect of the present invention, a cutting-through method for the outer conductor cutting-through device as described in the first aspect is further provided. The cutting-through method includes the steps of:
driving the cable gripper to grip a cable according to a defined position;
driving the supporting assembly to grip two cable cores to enable the longitudinal gripping assemblies to grip the two cable cores on both sides in a vertical direction, and the transverse gripping assemblies to grip the two cable cores on both sides in a horizontal direction, and inserting the cable separator into a position between the two cable cores;
driving the feeding assembly to move a single outer conductor on a terminal strip onto the holding seat;
driving the gripper to rotate to the first angle and to grip the outer conductor that has been moved to the holding seat;
driving the cutting-off assembly to cut through the outer conductor that has been moved onto the holding seat;
transferring the gripper to the second angle, and driving the threading driver to thread the outer conductor onto a central pin of the two cable cores;
driving the supporting assembly to release the gripping of the two cable cores; and
further driving the threading driver to thread the outer conductor in place.

The advantageous effects of the present invention are as follows: compared with the prior art, the present invention achieves the separation between the cutting-off operation and the subsequent threading operation for the outer conductor by first cutting-off the outer conductor from the terminal strip and then threading the outer conductor onto the cable, such that the cutting-off operation and the subsequent threading operation do not interfere with each other, thereby improving the accuracy in threading the outer conductor.

### BRIEF DESCRIPTION OF DRAWINGS

To describe the technical solutions in the embodiments of the present invention or in the prior art more clearly, the following briefly introduces the accompanying drawings required for describing the embodiments or the prior art. Obviously, the accompanying drawings in the following description show only some embodiments described in the present invention, and those of ordinary skill in the art may still derive other drawings from these accompanying drawings without creative effort.
FIG. 1 shows a schematic structural diagram of an outer conductor cutting-through device according to an embodiment of the present invention;
FIG. 2 shows a schematic structural diagram of a feeding and cutting-off mechanism according to an embodiment of the present invention;
FIG. 3 shows a schematic structural diagram of a moving and threading mechanism according to an embodiment of the present invention;
FIG. 4 shows a schematic structural diagram of a gripping and supporting mechanism according to an embodiment of the present invention;
FIG. 5 shows a schematic diagram of a partially enlarged structure at A shown in FIG. 3 according to an embodiment of the present invention;
FIG. 6 shows a schematic diagram of a partially enlarged structure at B shown in FIG. 4 according to an embodiment of the present invention;
FIG. 7 shows a schematic structural diagram of closed supporting assemblies according to an embodiment of the present invention from a back angle of view; and
FIG. 8 shows a flowchart of the steps of a cutting-through method for an outer conductor cutting-through device according to an embodiment of the present invention from a back angle of view.

### DETAILED DESCRIPTION OF THE EMBODIMENTS

The technical solutions in the embodiments of the present invention will be described clearly and completely below in conjunction with the accompanying drawings in the embodiments of the present invention. Obviously, the embodiments described are merely some instead of all of the embodiments of the present invention.

It should be noted that when an element is referred to as being "fixed to" another element, said element can be disposed on said another element directly or possibly with an element centered therebetween. When an element is considered as being "connected to" another element, said element can be connected to said another element directly or possibly with an element centered therebetween at the same time. The terms "perpendicular", "horizontal", "left", "right" and other similar expressions as used herein are for an illustrative purpose, instead of representing a unique implementation.

Unless otherwise defined, all the technical and scientific terms as used herein have the same meanings as those commonly understood by those skilled in the art of the present invention. The terms as used herein in the Description of the present invention are merely for the purpose of describing specific embodiments, and are not intended to limit the present invention. The term "and/or" as used herein includes any and all combinations of one or more associated listed items.

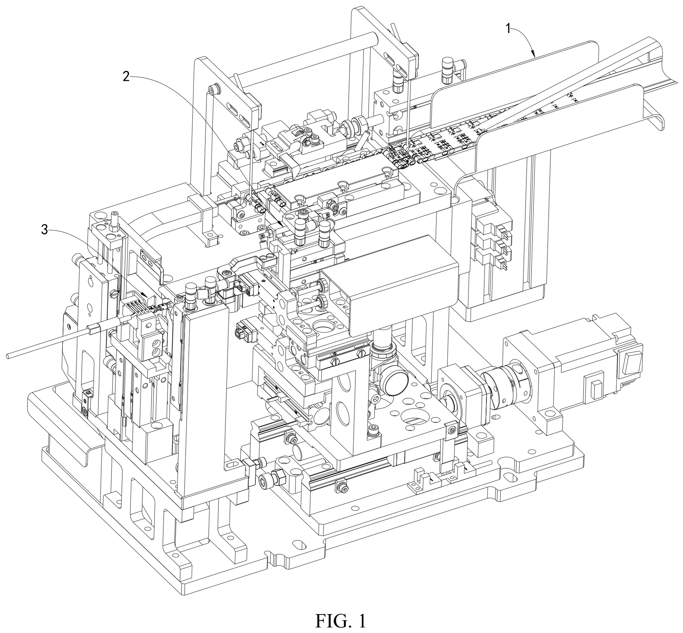

The outer conductor cutting-through device as shown in FIGS. 1 to 7 includes: a feeding and cutting-off mechanism 1, a moving and threading mechanism 2 and a gripping and supporting mechanism 3. Here, as shown in FIG. 1, the feeding and cutting-off mechanism 1 includes a feeding assembly 11 for moving a terminal strip, a cutting-off assembly 12 arranged in a terminal strip movement direction, and a holding seat 13 arranged in a direction opposite the cutting-off assembly 12 for holding an outer conductor. Here, it should be noted that the feeding assembly 11 belongs to the prior art, in which the movement of the terminal strip where the outer conductor is located is achieved by swinging a wedge-shaped feeding member to move the terminal strip by the distance corresponding to the spacing between the outer conductors by each swinging.

The moving and threading mechanism 2 is arranged on a side of the feeding and cutting-off mechanism 1 and includes: a sliding seat 21 capable of reciprocating in a direction parallel to the terminal strip movement direction, a threading driver 22 for driving the sliding seat 21 to move, a gripper 23 arranged on the sliding seat 21, and a rotation driver 24 connected to the gripper 23 for driving the gripper 23 to change in direction.

The gripping and supporting mechanism 3 is arranged on a distal end relative to the movement direction of the gripper 23, and includes a cable gripper 31 for gripping a cable.

Here, when the rotation driver 24 drives the gripper 23 to rotate to a first angle, the gripper 23 is disposed towards the holding seat 13, and when the rotation driver 24 drives the gripper 23 to rotate to a second angle, the gripper 23 is disposed towards the cable gripper 31; and when the threading driver 22 drives the sliding seat 21 to move to a first position, the gripper 23 corresponds to the holding seat 13, and when the threading driver 22 drives the sliding seat 21 to move to a second position, the gripper 23 threads the outer conductor onto a central pin. As shown in FIG. 1, at the first position, the gripper 23 rotates to the first angle and thus exactly grips the outer conductor on the holding seat 13, and when rotating to the second angle, the gripper 23 moves the cut-off outer conductor axially to a direction coaxial to the cable, and then towards the cable direction, thereby threading the outer conductor onto the central pin of the cable.

In the embodiment described above, compared with the prior art, the present invention achieves the separation between the cutting-off operation and the subsequent threading operation for the outer conductor by first cutting off the outer conductor from the terminal strip and then threading the outer conductor over the cable, such that the cutting-off operation and the subsequent threading operation do not interfere with each other, thereby improving the accuracy in threading the outer conductor.

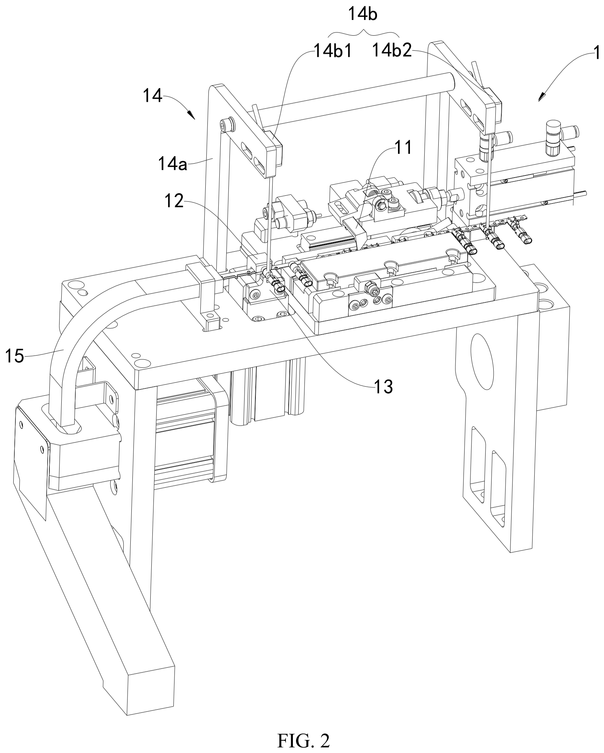

Referring to FIG. 2, based on the embodiment described above and in order to further ensure the reliability and accuracy in moving the terminal strip, the feeding and cutting-off mechanism 1 is further provided with an identification mechanism 14, which includes fixed frames 14a fixed on both sides of the feeding assembly 11 and laser sensors 14b fixed to the fixed frames 14a, and the laser sensors 14b are disposed towards the terminal strip. The provision of the laser sensors 14b allows for detecting whether the outer conductor is properly positioned. Here, being disposed towards the terminal strip specifically refers to being disposed towards the outer conductor on the terminal strip. Due to the spaced arrangement of the outer conductors, the proper positioning of the outer conductor is indicated if the laser light is blocked. Specifically, still referring to FIG. 2 above, in some embodiments of the present invention, the laser sensors 14b include a first sensor 14b1 disposed towards the holding seat 13 and a second sensor 14b2 disposed towards the terminal strip at an incoming side of the feeding assembly 11. The first sensor 14b1 serves to detect whether the outer conductor has reached the holding seat 13, and the second sensor 14b2 serves to detect whether a shortage occurs to the terminal strip. When the first sensor 14b1 detects the presence of the outer conductor on the holding seat 13 and the second sensor 14b2 does not detect the presence of the outer conductor, it indicates that the terminal strip is nearly depleted, in which case a shortage alarm is given. Furthermore, in some embodiments of the present invention, in order to avoid congestion caused by scraps produced after the outer conductor is cut off from the terminal stri, as shown in FIG. 2, the feeding and cutting-off mechanism 1 is further provided with a guide pipe 15 with one end towards the feeding assembly 11 and the other end extending to a scrap box for discharging scraps from the terminal strip.

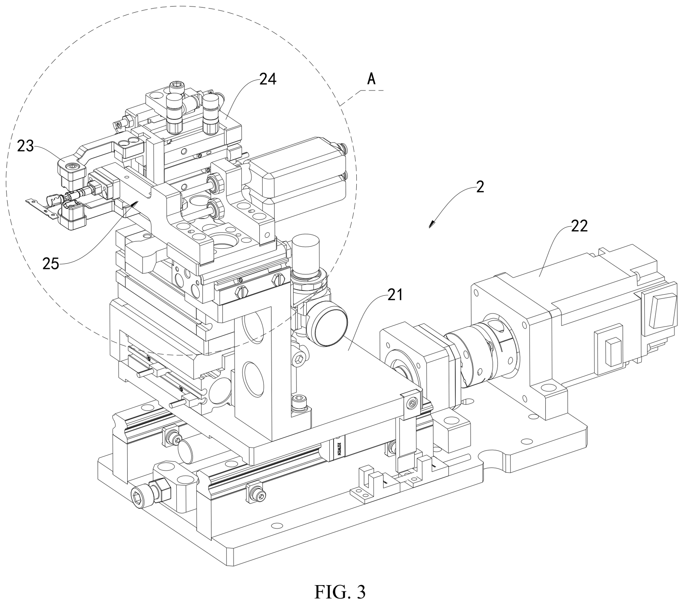

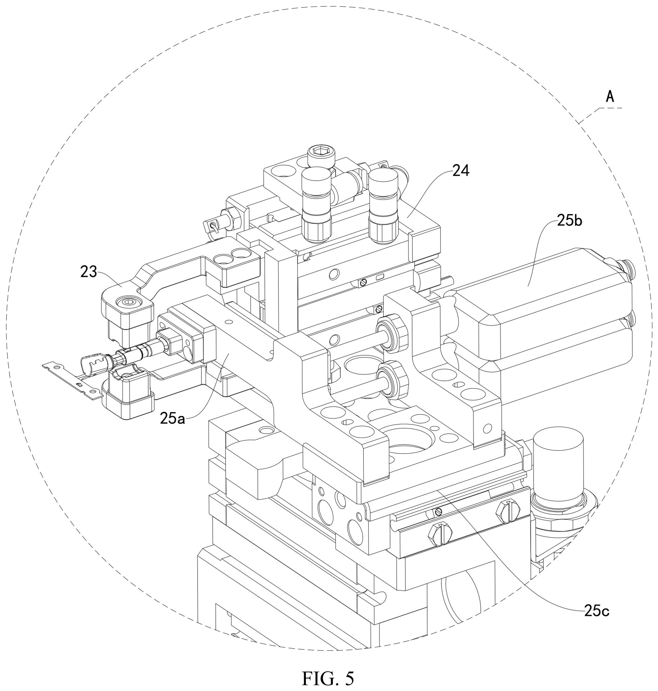

Referring to FIG. 3, in some embodiments of the present invention, in order to improve the accuracy in threading the outer conductor, the sliding seat 21 is further provided with a depth detecting mechanism 25 for detecting a distance between the central pin and an end of the outer conductor. Specifically, as shown in FIG. 5, the depth detecting mechanism 25 includes a probe 25a, a GT detector 25b connected to the probe 25a, and a detection driver 25c for driving the probe 25a to move towards a cable direction, and the probe 25a is located at a central position between two gripping jaws when the cable gripper 31 rotates to the second angle. In this way, after the threading of the outer conductor is completed, the detection driver 25c drives the probe 25a and the GT detector 25b to move towards the outer conductor synchronously, and after the probe 25a comes into contact with the outer conductor, the distance between the central pin and the edge of the outer conductor is determined based on the moving distance of the probe. The GT detector 25b belongs to the prior art, the internal structure of which will not be described in detail here. Furthermore, in the embodiments of the present invention, various drivers belong to the prior art, such as a motor-driven lead screw structure or an air cylinder or other linear drive structures, which will not be described in detail here.

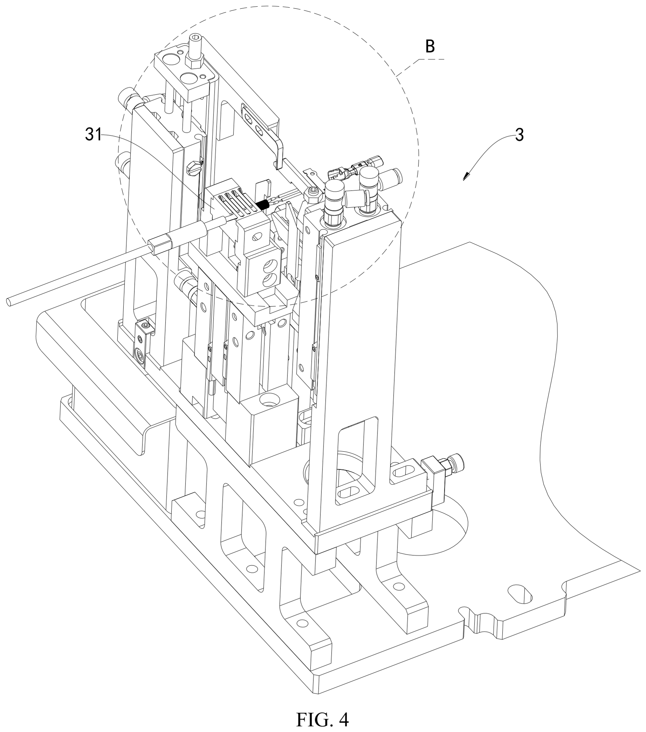

As shown in FIGS. 4, 6 and 7, in some embodiments of the present invention, the cable is a dual-core cable, and the outer conductor has a dual-hole structure; the gripping and supporting mechanism 3 is further provided with a supporting assembly 32 disposed on the cable gripper 31 towards a direction close to the moving and threading mechanism 2; the supporting assembly 32 is provided with a cable separator 32a that is movably disposed towards a central direction of the dual-core cable; and the cable separator 32a serves to spread a distance between two cable cores to correspond to two holes of the outer conductor. In this way, the two cable cores are spread apart by means of the cable separator 32a to enable the distance between the two cable cores to correspond to the hole positions on the outer conductor, thereby improving the success rate of cable threading.

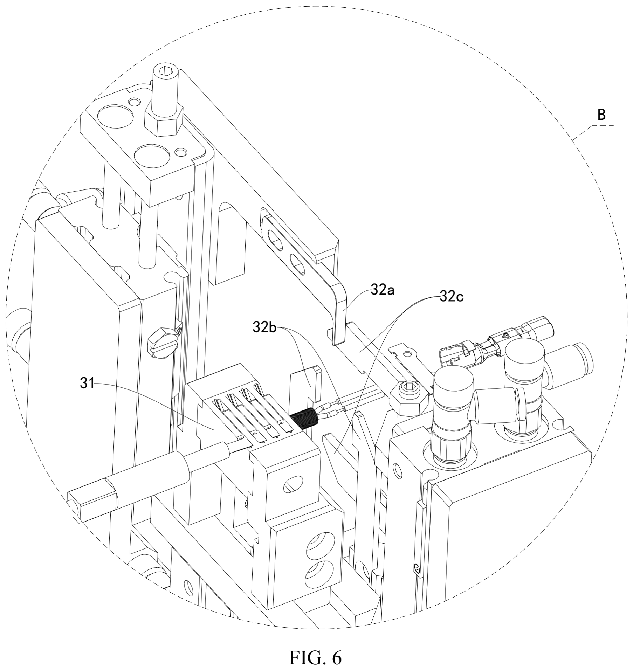

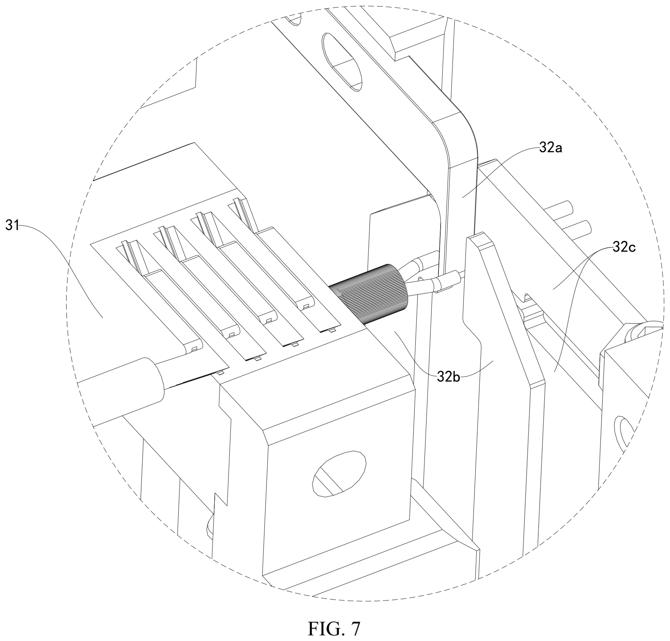

Further, still referring to FIG. 6, the supporting assembly 32 further includes transverse gripping assemblies 32b arranged on both sides of the cable separator 32a in a horizontal direction, and the distance between the closed transverse gripping assemblies 32b corresponds to the maximum transverse distance between the two inserted cable cores. The supporting assembly 32 further includes longitudinal gripping assemblies 32c arranged on both sides of the cable separator 32a at a cable insertion position in a vertical direction, and the distance between the closed longitudinal gripper 23 is equal to the diameters of the two cable cores. In this way, the transverse and longitudinal gripping limits the movement direction of the two cable cores after the cable separator 32a is inserted, which further allows for parallel spaced arrangement of the two cable cores of the dual-core cable. As shown in FIG. 7, this arrangement enables the two cable cores to correspond to the two hole positions in the outer conductor during actual threading of the outer conductor.

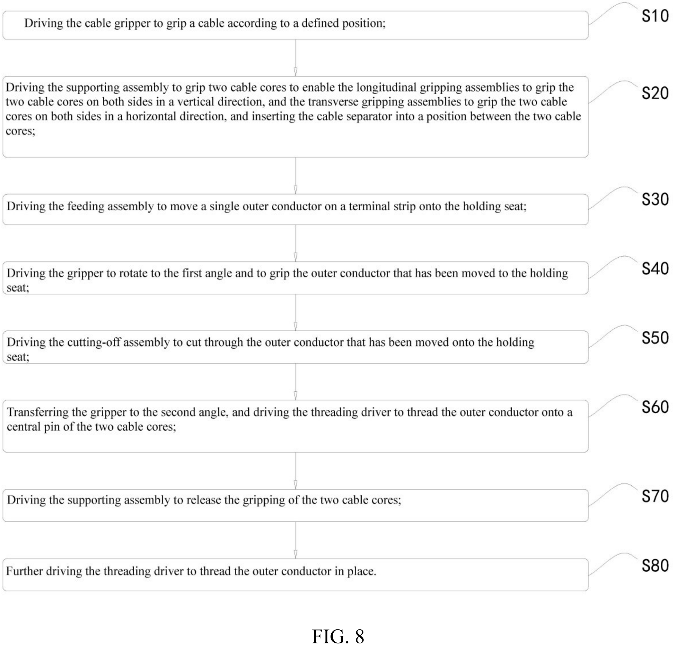

In an embodiment of the present invention, a cutting-through method for the outer conductor cutting-through device described above is further provided. As shown in FIG. 8, the cutting-through method includes the steps as follows.

In S10, the cable gripper 31 is driven to grip a cable according to a defined position. Here, the cable refers to the one with a processed terminal, i.e., a cable in which the sheaths of two inner cores have been stripped and a central conductor has been crimped onto the inner cores.

In S20, the supporting assembly 32 is driven to grip two cable cores to enable the longitudinal gripping assemblies 32c to grip the two cable cores on both sides in a vertical direction, and the transverse gripping assemblies 32b to grip the two cable cores on both sides in a horizontal direction, and the cable separator 32a is inserted into a position between the two cable cores. As shown in FIG. 7, in such an arrangement, the distance between the two inner cores is fixed to facilitate the subsequent threading of the outer conductor.

In S30, the feeding assembly 11 is driven to move a single outer conductor on a terminal strip onto the holding seat 13.

In S40, the gripper 23 is driven to rotate to the first angle and to grip the outer conductor that has been moved to the holding seat 13.

In S50, the cutting-off assembly 12 is driven to cut off the outer conductor that has been moved onto the holding seat 13. The feeding and cutting-off procedures of the outer conductor have been mentioned hereinabove, which will not be described in detail here. It should be noted here that when rotating to the first angle, the gripper 23 is in an open state and exactly rotates to the upper and lower sides of the outer conductor on the holding seat 13, and then, the gripper 23 grips the outer conductor for the subsequent cutting-off and transferring operations.

In S60, the gripper 23 is transferred to the second angle, and the threading driver 22 is driven to thread the outer conductor onto a central pin of the two cable cores.

In S70, the supporting assembly 32 is driven to release the gripping of the two cable cores. Here, releasing the gripping refers to that the gripping jaws of the transverse gripping assemblies 32b and the gripping jaws of the longitudinal gripping assemblies 32c move away from each other, and the cable separator 32a also moves towards a direction away from the cable cores, such that the supporting assembly 32 does not affect the further threading of the outer conductor.

In S80, the threading driver 22 is further driven to thread the outer conductor properly. Here, it should be noted that the proper threading can be detected by means of the depth detecting mechanism 25 described above in the embodiment of the present invention; and after proper threading, the outer conductor is then transferred to the next procedure for processing. In such an arrangement, the threading is more accurate, which improves the success rate and reliability in threading.

Those skilled in the industry should understand that the present invention is not limited by the embodiments described above. The descriptions in the above embodiments and Description are merely for a purpose of describing the principle of the present invention. A variety of variations and improvements can be made to the present invention without departing from the spirit and scope of the present invention. These variations and improvements shall fall within the scope claimed by the present invention. The scope claimed by the present invention is subjected to the appended claims and equivalents thereof.

## Claims

1. An outer conductor cutting-through device, comprising:
a feeding and cutting-off mechanism, comprising a feeding assembly for moving a terminal strip, a cutting-off assembly arranged in a terminal strip movement direction, and a holding seat arranged in a direction opposite the cutting-off assembly for holding an outer conductor;
a moving and threading mechanism arranged on a side of the feeding and cutting-off mechanism, the moving and threading mechanism comprising a sliding seat capable of reciprocating in a direction parallel to the terminal strip movement direction, a threading driver for driving the sliding seat to move, a gripper arranged on the sliding seat, and a rotation driver connected to the gripper for driving the gripper to change in direction; and
a gripping and supporting mechanism arranged on a distal end relative to a gripper movement direction, the gripping and supporting mechanism comprising a cable gripper for gripping a cable;
wherein when the rotation driver drives the gripper to rotate to a first angle, the gripper is disposed towards the holding seat, and when the rotation driver drives the gripper to rotate to a second angle, the gripper is disposed towards the cable gripper; and when the threading driver drives the sliding seat to move to a first position, the gripper corresponds to the holding seat, and when the threading driver drives the sliding seat to move to a second position, the gripper threads the outer conductor onto a central pin.

2. The outer conductor cutting-through device according to claim 1, wherein the feeding and cutting-off mechanism is further provided with an identification mechanism, which comprises fixed frames fixed on both sides of the feeding assembly and laser sensors fixed to the fixed frames, and the laser sensors are disposed towards the terminal strip.

3. The outer conductor cutting-through device according to claim 2, wherein the laser sensors comprise a first sensor disposed towards the holding seat and a second sensor disposed towards the terminal strip at an incoming side of the feeding assembly.

4. The outer conductor cutting-through device according to claim 1, wherein the feeding and cutting-off mechanism is further provided with a guide pipe with one end towards the feeding assembly and the other end extending to a scrap box for discharging scraps from the terminal strip.

5. The outer conductor cutting-through device according to claim 1, wherein the sliding seat is further provided with a depth detecting mechanism for detecting a distance between the central pin and an end of the outer conductor.

6. The outer conductor cutting-through device according to claim 5, wherein the depth detecting mechanism comprises a probe, a GT detector connected to the probe, and a detection driver for driving the probe to move towards a cable direction, and the probe is located at a central position between two gripping jaws when the cable gripper rotates to the second angle.

7. The outer conductor cutting-through device according to claim 1, wherein the cable is a dual-core cable, and the outer conductor has a dual-hole structure; the gripping and supporting mechanism is further provided with a supporting assembly disposed on the cable gripper towards a direction close to the moving and threading mechanism; the supporting assembly is provided with a cable separator that is movably disposed towards a central direction of the dual-core cable; and the cable separator serves to spread a distance between two cable cores to correspond to two holes of the outer conductor.

8. The outer conductor cutting-through device according to claim 7, wherein the supporting assembly further comprises transverse gripping assemblies arranged on both sides of the cable separator in a horizontal direction, and a distance between the closed transverse gripping assemblies corresponds to a maximum transverse distance between the two inserted cable cores.

9. The outer conductor cutting-through device according to claim 8, wherein the supporting assembly further comprises longitudinal gripping assemblies arranged on both sides of the cable separator at a cable insertion position in a vertical direction, and a distance between the closed longitudinal gripper is equal to diameters of the two cable cores.

10. A cutting-through method for the outer conductor cutting-through device according to claim 9, comprising the steps of:
driving the cable gripper to grip a cable according to a defined position;
driving the supporting assembly to grip two cable cores to enable the longitudinal gripping assemblies to grip the two cable cores on both sides in a vertical direction, and the transverse gripping assemblies to grip the two cable cores on both sides in a horizontal direction, and inserting the cable separator into a position between the two cable cores;
driving the feeding assembly to move a single outer conductor on a terminal strip onto the holding seat;
driving the gripper to rotate to the first angle and to grip the outer conductor that has been moved to the holding seat;
driving the cutting-off assembly to cut through the outer conductor that has been moved onto the holding seat;
transferring the gripper to the second angle, and driving the threading driver to thread the outer conductor onto a central pin of the two cable cores;
driving the supporting assembly to release the gripping of the two cable cores; and
further driving the threading driver to thread the outer conductor in place.
